# EUROPEAN PATENT SPECIFICATION

(11) **EP 2 603 551 B1**
(45) Date of publication and mention of the grant of the patent: **06.11.2019**
(21) Application number: 11816905.1
(22) Date of filing: 09.08.2011
(51) Int. Cl.: C08K 3/22, C09C 1/36, B32B 5/00, B32B 5/02, B32B 27/00, B32B 27/06, B32B 27/08, B32B 27/12, B32B 27/18, B32B 27/20, B32B 27/32, E04D 5/10, C08L 23/10

(54) **THERMOPLASTIC POLYOLEFIN MEMBRANE WITH ENHANCED THERMAL RESISTANCE**
THERMOPLASTISCHE POLYOLEFINMEMBRAN MIT VERBESSERTER HITZEBESTÄNDIGKEIT
MEMBRANE EN POLYOLÉFINE THERMOPLASTIQUE AYANT UNE RÉSISTANCE THERMIQUE AMÉLIORÉE

(30) Priority: 09.08.2010 US 372066 P
(43) Date of publication of application: 19.06.2013
(73) Proprietor: Building Materials Investment Corporation, Dallas, TX 75212 (US)
(72) Inventor: XING, Linlin, Wayne, NJ 07470 (US); TAYLOR, Thomas, J., Valley Cottage, NY 10989 (US)
(74) Representative: Barker Brettell LLP
(86) International application number: PCT/US2011/047039
(87) International publication number: WO 2012/021489

(56) References cited:
- WO-A1-95/03217
- FR-A1- 2 796 974
- GB-A- 1 172 167
- US-A- 5 468 550
- US-A- 5 523 357
- US-A1- 2004 033 741
- US-A1- 2004 033 741
- US-A1- 2007 193 167
- US-A1- 2008 008 858
- US-A1- 2008 179 574
- US-B1- 6 632 509

## Description

### CROSS-REFERENCE TO RELATED APPLICATIONS

The present application is a 35 U.S.C. 371 application and claims priority to co-pending International Application No. PCT/US2011/047039, filed August 9, 2011 entitled "Thermoplastic polyolefin membrane with enhanced thermal resistance" which claims priority to U.S. Provisional Patent Application Nos. 61/372066, filed August 9, 2010 and 61/429293, filed January 3, 2011 entitled "Thermoplastic polyolefin membrane with enhanced thermal resistance."

### TECHNICAL FIELD

This invention relates generally to roofing products, and more particularly to roofing membrane formulated to have enhanced thermal resistance.

### BACKGROUND

Thermoplastic polyolefin (TPO) based roofing membranes are one of many types of roofing membranes available on the market today. TPO may be a melt blend or reactor blend of a polyolefin plastic, such as a polypropylene polymer, with an olefin copolymer elastomer (OCE), such as an ethylene-propylene rubber (EPR) or an ethylene-propylene-diene rubber (EPDR). Examples of commercially available TPO membranes include SURE WELDTM (Carlisle Inc.), GENFLEXTM (Omnova Solutions, Inc), ULTRAPLYTM (Firestone Building Products) and EVERGUARD TPOTM (OAF). Novel stretchable TPO membranes are disclosed in U.S. Patent No. 7,666,491.

TPO-based roofing membranes may comprise one or more layers. A TPO membrane may comprise base- (bottom) and cap- (top) layers with a fiber reinforcement scrim (middle) sandwiched between the other two layers. The scrim may be a woven, nonwoven, or knitted fabric composed of continuous strands of material used for reinforcing or strengthening membranes. The scrim is generally the strongest layer in the composite. The fabric can contribute significantly to the tensile strength of the roofing membrane and provide for dimensional stability. In an example, the fabric reinforcement comprises a polyester yarn based scrim. Glass fiber based scrims may also be used for situations where additional weight and/or improved dimensional stability are desired.

US Patent Application US 2004/0033741 A1 describes a roofing membrane that includes a substrate sheet formed of a thermoplastic vulcanizate (TPV) and a film layer of thermoplastic polyolefin (TPO) adhered to at least one surface of the substrate sheet. The TPV preferably includes a copolymer of ethylene and a carbonyl containing monomer dynamically vulcanized in a polyolefin thermoplastic, preferably metallocene-catalyzed polyethylene. US Patent Application US 2008/0179574 A1 describes a membrane for use as an outdoor building material comprising a non-reinforced TPO outdoor building material membrane composed of a single ply embossed thermoplastic polyolefin polymer, wherein the membrane is composed of a thermoplastic polyolefin polymer with at least one of the following ingredients of a fire retardant, a UV and thermal stabilizers, a titanium dioxide and a calcium carbonate. United States Patent 5 523 357 describes a blend of chlorosulfonated polyethylene (CSPE) and amorphous chlorinated polyethylene (CPE) together with an additive of crystalline thermoplastic polyolefin (e.g. ultralow density polyethylene). This material is easily processed on the rolls of a rubbermill (i.e. calender) to form continuous sheets of membrane suitable for use in single ply roofing and other similar applications.

WO9503217A1 discloses thermoplastic molding compositions, especially polyolefin compositions such as HDPE and EP copolymer compositions, concentrates thereof adapted to be diluted by addition of further thermoplastic, and molded transparent products made therefrom which are characterized by effective UV light screening capacity, while still retaining transparency, due to incorporation therein of low-levels of ultrafine titanium dioxide, the TiO2 being present therein in an amount of 0.15 to 1.0, preferably 0.2 to 0.5 percent by weight, the particle size of the TiO2 being between 0.015 and 0.1 micron, preferably 0.015 and 0.08 micron, and a process for the production thereof. The molded products are plastic milk containers whereby the Vitamin A content is protected against UV destruction and taste deterioration without introduction of adverse flavors or odors. Percentages of TiO2 in the concentrates are adapted to produce the desired amounts in the molding compositon upon dilution, and are between 5 and 30 percent, preferably between 7.5 and 15 percent, by weight.

### BRIEF SUMMARY

According to an aspect of the invention, there is provided a thermoplastic polyolefin composition, as defined in claim 4.

According to another aspect of the invention, there is provided a thermoplastic polyolefin roofing or geothermal membrane, as defined in claim 1.

According to another aspect of the invention, there is provided a method of manufacturing a thermoplastic polyolefin membrane, as defined in claim 12.

Preferred and/or optional features of the above aspects are set out in the dependent claims.

### BRIEF DESCRIPTION OF THE DRAWINGS

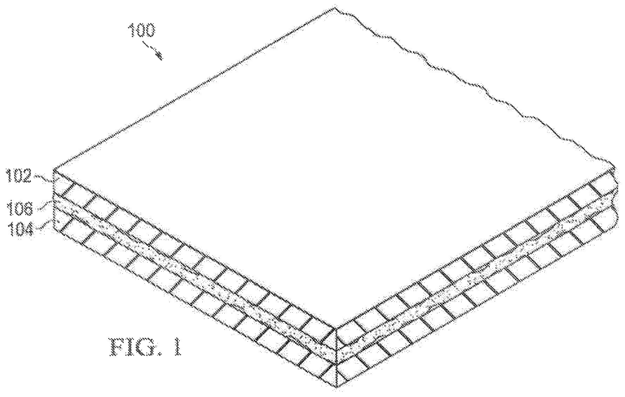

**Figure 1** illustrates a perspective, side view of an exemplary TPO membrane in accordance with the present disclosure.

### DETAILED DESCRIPTION

**Figure 1** is a perspective, side view of a portion TPO membrane 100. The TPO membrane 100 comprises a cap layer 102 and a core layer 104. A scrim layer 106 is substantially sandwiched between the cap layer 102 and the core layer 104. Each of the cap layer 102 and core layer 104 is made of a TPO sheet. When installed on the roof of a house, the TPO membrane 100 may be oriented such that the cap layer 102 is facing upward toward the direction of sunlight and the core layer 104 is facing downward toward the roof. As such, the cap layer 102 may be formulated with additives such as UV stabilizers, UV absorbers, antioxidants, process and thermal stabilizers, fire retardants, white pigments or color pigments, and any other additives known in the art. The formulation of the cap layer 102 may provide for long-term stability in an outside environment and provide an aesthetic appearance if containing color pigments. While the core layer 104 may be formulated to include additives, the core layer 104 may be configured to include no additives to reduce costs. In embodiments in which the core layer 104 includes additives, the formulation for the core layer 104 may be the same as the formulation for the cap layer 102. In another embodiment in which the core layer 104 includes additives, the formulation for the core layer 104 may be different from the formulation for the cap layer 102.

A method of preparing TPO membrane 100 may comprise first mixing the additives with TPO to effect a desired formulation and forming a sheet of TPO by extrusion. As such, the additives may be distributed throughout the TPO sheet. To form the TPO membrane 100, scrim 106 may be disposed between the TPO sheets 102 and 104, and the three layers may be laminated together at an elevated temperature such that the two TPO layers 102 and 104 are fused and welded together through the interstices of the scrim 106.

Due to the rising energy cost, installing solar panels over a commercial roof may provide significant energy saving for the building owner. Solar panels may be rigid solar panels as well as flexible solar panels. Flexible solar panels may be installed on the roof by directly laminating the backside of the solar panels to the top side of roofing membranes. A significant amount of heat may be generated by the solar panels, especially if they have dark colors. The heat in turn may be transferred to the surface of roofing membranes that are underneath of the flexible solar panels. Consequently, the surface temperature of roofing membranes underneath the solar panels can reach over 93.33°C (200°F) in hot climates. In a similar manner, geomembranes may have flexible solar panels laminated or otherwise attached to their cap layers.

In embodiments in which the TPO membrane 100 is installed on the roof, a flexible solar panel (not shown) may be laminated to the cap layer 102 of the TPO membrane 100. As such, the cap layer 102 may be subject to the heat generated by the solar panel. Evan without a flexible solar panel installed over the TPO membrane 100, the absorption of intense light during the summer can also subject the TPO membrane 100 to a high temperature.

A disadvantage of conventional TPO roofing membranes is that they are designed to withstanding field temperature below 82.22°C (180°F). If TPO roofing membranes are exposed to a field temperature higher than 82.22°C (180°F) for an extended period (such as a couple of years), the TPO membranes may degrade quickly due to UV radiation along with thermal-oxidative degradation caused by high-temperature exposure. Such degradation may lead to surface cracking of the TPO membranes and therefore premature field failure or roof leaking.

The cap layer 102 and core layer 104 of the TPO membrane 100 may be formulated to include TPO resins. Additives may be included in the TPO cap layer 102 to enhance the resistance to degradation. In some embodiments, additives may also be included in the TPO core layer 104. Suitable additives may include a UV stabilizer package. A UV stabilizer package may include any combination of one or more below ingredients: 1) UV stabilizers functioning as free radical scavengers (e.g., Tinuvin XT-850, which is a Hindered Amine Light Stabilizer ("HALS")); 2) antioxidants functioning as inhibitors of thermo-oxidative degradation at a broad temperature range for long-term thermal stabilizers (e.g., Irganox 1010, which is a sterically hindered phenolic antioxidant); 3) process or thermal stabilizers functioning as inhibitors of thermo-oxidative degradation during extrusion process (e.g., Irgastab FS301, which is a system comprised of a phosphate processing stabilizer Irgafos 168 and a high molecular weight hydroxylamine Irgastab FS042); and/or 4) UV absorber functioning to absorb UV light and dissipate it as thermal energy (e.g., Tinuvin 328, which is 2-(2H-benzotriazol-2-yl)-4,6-ditertpentylphenol).

In addition to a UV stabilizer package, the TPO cap layer 102 and/or core layer 104 may further include other additives. For example, the formulation for TPO cap layer 102 and/or core layer 104 may include rutile titanium dioxide (TiO2) and at least one fire retardant. In an embodiment, the formulation for TPO cap layer 102 may include 1-10 weight percent rutile TiO₂. In another embodiment, the formulation for TPO cap layer 102 may include 2-4 weight percent rutile TiO₂ The use of TiO₂ in a pigment package has been described in U.S. Patent Pub. No. 2008/0050559, which is incorporated by reference herein. TiO₂ may also be included in a UV stabilizer/antioxidant package as described in U.S. Patent Pub. No. 2004/0157075.

One of ordinary skill in the art would appreciate the difference in particle size between rutile TiO₂ and ultrafine TiO₂ such as the DuPont™ Light Stabilizer 210 ("DLS 210"), which in some embodiment may have a mean particle size of 130 nm. By comparison, rutile TiO₂ generally has a mean particle size ranging from around 250 nm or more.

A surprising benefit of including ultrafine TiO₂ in a TPO formulation is an unexpected improvement in heat resistance. Disclosed in the present disclosure are surprising heat resistance data observed in TPO formulations comprising ultra fine TiO₂ together with other UV stabilizer package components. According to an embodiment of the present disclosure, an exemplary heat-resistant TPO formulation comprises TPO resins and a UV stabilizer package that includes 0.001 to 3 weight percent ultrafine TiO₂. The exemplary heat-resistant TPO formulation may further comprise rutile TiO₂ and a fire retardant. In addition to the ultrafine TiO₂ the UV stabilizer package in the heat resistant formulation may include any suitable components described in the present disclosure. In an embodiment, the UV stabilizer package may include Tinuvin XT-850, Tinuvin 328, Irgastab FS301. In another embodiment, UV stabilizer package may include Tinuvin XT-850, Tinuvin 328, Uvasorb HA88FD (a HALS), Irgastab FS301, and Irganox 1010. It is to be appreciated that various combinations of UV stabilizer packages components in various amounts may be used together with ultrafine TiO₂ to provide various heat-resistant TPO formulations in accordance with the principles of the present disclosure.

An exemplary heat-resistant formulation according to the present disclosure is provided in Table 1 below, and the heat resistance of such a formulation is compared to that of comparative examples A, B, and C. Based on these four different TPO formulations for the cap layer 102, four different test TPO membranes were prepared. Each test TPO membrane has a thickness of 80 mm. All four illustrative formulations include TPO resins and 3% rutile TiO₂. The heat-resistant formulation 1 includes a UV stabilizer package comprising 2% DLS 210, along with 1.7% Tinuvin XT-850, .5% Tinuvin 328, and .5% Irgastab FS301, The UV stabilizer package in comparative example A includes only 2% DLS 210 without additional additives. Compared to the novel UV stabilizer package in the heat-resistant formulation 1, the UV stabilizer package in comparative example B does not include any ultrafine TiO₂ but is otherwise the same. Compared to the novel UV stabilizer package in the heat-resistant formulation 1, the UV stabilizer package in comparative example C does not include any ultrafine TiO₂ but includes an additional .25% of Irganox 1010.

The test TPO membranes were tested according to the 133.77°C (280°F) oven test method, which comprises the following steps: 1) set the oven temperature to 133.77°C (280°F) for a forced air oven which is well calibrated; 2) put 2.54 by 6.98 cm (1 by 2.75 inch) piece of the test TPO membrane into the oven; 3) after oven aging for a time period, take the sample out of the oven to cool it down to room temperature; 4) wrap the sample around 7.62 cm (3 inch) mandrel to examine the TPO cap layer side to see if there are visible cracks under 10X magnification; and 5) if there is visible cracks under 10X magnification, record numbers of days the TPO sample being aged inside of 133.77°C (280°F) oven.

**Table 1: Thermal Resistance of 80 mil TPO Membrane**

| | **Heat-resistant Formulation 1** | **Comparative Example-A** | **Comparative Example-B** | **Comparative Example-C** |
|---|---|---|---|---|
| Cap Layer Compositions | • TPO resins | • TPO resins | • TPO resins | • TPO resins |
| | • 3% Rutile TiO₂ | • 3% Rutile TiO₂ | • 3% Rutile TiO₂pigment | • 3% Rutile TiO₂pigment |
| | • Fire retardant | • Fire retardant | • Fire retardant | • Fire retardant |
| | • Novel UV stabilizer package | • UV stabilizer package-A | • UV stabilizer package-B | • UV stabilizer package-C |
| UV stabilizer package in Cap layer (additive wt.% per 100% TPO formulation) | • 1.7% Tinuvin XT-850 | • 2% DLS210 only | • 1.7% Tinuvin XT-850 | • 1.7% Tinuvin XT-850 |
| | • 0.5% Tinuvin 328 | | • 0.5% Tinuvin 328 | • 0.5% Tinuvin 328 |
| | • 0.5% Irgastab FS301 | | • 0.5% Irgastab FS301 | • 0.5% Irgastab FS301 |
| | • **2% DLS 210** | | | • 0.25% Irganox 1010 |
| Reinforced Scrim | Polyester | Polyester | Polyester | Polyester |
| Core Layer Compositions | • Same compositions as Comparative Example-A | • TPO resins | Same compositions as Comparative Example-A | Same compositions as Comparative Example-A |
| | | • TiO₂ | | |
| | | • Fire retardant | | |
| | | • UV stabilizer package | | |
| | | • Color pigments | | |
| Days to cap cracks with 280F Oven Test | **184 days** | 25 days | 74 days | 132 days |
| Thermal Resistance Improvement% over comparative example-A | **636 %** | | | |
| Thermal Resistance Improvement% over comparative example-B | **149 %** | | | |
| Thermal Resistance Improvement% over comparative example-C | **39 %** | | | |

Comparing heat-resistant formulation 1 to comparative example A, which includes only ultrafine TiO₂ in its UV stabilizer package, the data in Table 1 shows that heat-resistant formulation 1 improves the heat resistance by 636%. The heat-resistance data for comparative examples B and C shows that while a conventional UV stabilizer package comprising three or four different components may provide some heat resistance, the addition of ultrafine TiO₂ synergistically allows for at least a 39% improvement in heat resistance.

According to an embodiment of the present disclosure, an exemplary heat-resistant formulation comprises TPO resins and a UV stabilizer package that includes 0.25 - 2 weight percent ultrafine TiO₂. According to another embodiment of the present disclosure, an exemplary heat-resistant formulation comprises TPO resins and a UV stabilizer package that includes 0.5 - 2 weight percent ultrafine TiO₂. According to yet another embodiment of the present disclosure, an exemplary heat-resistant formulation comprises TPO resins and a UV stabilizer package that includes 1.5 - 2 weight percent ultrafine TiO₂.

Shown in Table 2 is the correlation between the amount of ultrafine TiO₂ and the corresponding effectiveness in resisting heat-induced degradation, Exemplary heat-resistant formulations 2-5 are identical except the amount of ultrafine TiO₂ (DLS210) is increased from .5% to 2%. The days it took for cracks to develop did not increase linearly with increases in the concentration of ultrafine TiO₂. While each formulation still provides improved heat resistance over comparative examples D and E, there appears to be an optimal heat resistance at around 1.5% to 2% ultrafine TiO₂.

**Table 2: Thermal Resistance of 0.15 cm (60 mil) TPO Membrane**

| | **Heat-resistant Formulation 2** | **Heat-resistant Formulation 3** | **Heat-resistant Formulation 4** | **Heat-resistant Formulation 5** | **Comparative Example-D** | **Comparative Example-E** |
|---|---|---|---|---|---|---|
| Cap Layer Compositions | • TPO resins | • TPO resins | • TPO resins | • TPO resins | • TPO resins | • TPO resins |
| | • 3% Rutile TiO₂ | • 3% Rutile TiO₂ | • 3% Rutile TiO₂ | • 3% Rutile TiO₂ | • 3% Rutile TiO₂ | • 3% Rutile TiO₂ pigment |
| | • Fire retardant | • Fire retardant | • Fire retardant | • Fire retardant | • Fire retardant | • Fire retardant |
| | • Novel UV stabilizer package-2 | • Novel UV | • Novel UV | • Novel UV stabilizer | • UV stabilizer | • UV stabilizer |

| | | stabilizer package-3 | stabilizer package-4 | package-5 | packageD | package-E |
|---|---|---|---|---|---|---|
| UV stabilizer package in Cap layer (additive wt.% per 100% TPO formulation) | • 0.34% Tinuvin XT-850 | • 0.34% Tinuvin XT-850 | • 0.34% Tinuvin XT-850 | • 0.34% Tinuvin XT-850 | • 2% DLS210 only | • 0.34% Tinuvin XT-850 |
| | • 0.75% Uvasorb HA88FD | • 0.75% Uvasorb HA88FD | • 0.75% Uvasorb HA88FD | • 0.75% Uvasorb HA88FD | | • 0.75% Uvasorb HA88FD |
| | • 0.1% Tinuvin 328 | • 0.1% Tinuvin 328 | • 0.1% Tinuvin 328 | • 0.1% Tinuvin 328 | | • 0.1% Tinuvin 328 |
| | • 0.1% Irgastab FS301 | • 0.1% Irgastab FS301 | • 0.1% Irgastab FS301 | • 0.1% Irgastab FS301 | | • 0.1% Irgastab FS301 |
| | • 0.25% Irganox 1010 | • 0.25% Irganox 1010 | • 0.25% Irganox 1010 | • 0.25% Irganox 1010 | | • 0,25% Irganox 1010 |
| | • 0.5% DLS210 | • 1.0% DLS210 | • 1.5% DLS210 | • 2.0% DLS210 | | |
| Reinforced Scrim | Polyester | Polyester | Polyester | Polyester | Polyester | Polyester |
| Core Layer Compositions | • Same compositions as Comparative Example D | • Same compositions as Comparative Example D | • Same compositions as Comparative Example D | • Same compositions as Comparative Example D | • TPO resins | • Same compositions as Comparative Example D |
| | | | | | • TiO₂ | |
| | | | | | • Fire retardant | |
| | | | | | • UV stabilizer package | |
| | | | | | • Color pigments | |
| Days to cap cracks with 280F Oven Test | **139 days** | **139 days** | **154 days** | **150 days** | 25 days | 81 days |
| Thermal Resistance Improvement% over comparative example-D | **456%** | **456%** | **516%** | **500%** | | |
| Thermal Resistance Improvement% over comparative example-E | **72%** | **72%** | **90%** | **85%** | | |

It is to be appreciated that the optimal range of concentration of ultrafine TiO₂ may vary as the composition of the UV stabilizer package varies. It is to be further appreciated that the optimal concentration of ultrafine TiO₂ may vary as the mean particle size of the ultrafine TiO₂ varies. Ultrafine TiO₂ suitable for the formulations of the present disclosure may have a mean particle size of 165 nm or less. In an embodiment, ultrafine TiO₂ having a mean particle size between 125 to 150 nm may be used. In another embodiment, ultrafine TiO₂ having a mean particle size between 110 to 165 nm may be used. It is to be appreciated that the embodiments provide herein are merely exemplary, and may be adjusted in accordance with the principles of the present disclosure.

Turning back to Fig. 1, the cap layer 102 may be formulated according to any of the heat-resistant TPO formulations disclosed in the present disclosure. In an embodiment, the entirety of the cap layer 102 may formulated with the heat-resistant TPO formulation of the present disclosure. In another embodiment, only a portion of the cap layer 102 is formulated with the heat-resistant TPO formulation of the present disclosure. For example, the cap layer 102 may include a first sub-layer (not shown) adjacent to the outer surface of the cap layer 102, and in an embodiment, the cap layer 102 may be configured to have the first sub-layer formulated with the heat-resistant TPO formulation of the present disclosure.

While various embodiments in accordance with the disclosed principles have been described above, it should be understood that they have been presented by way of example only, and are not limiting, Thus, the breadth and scope of the invention(s) should not be limited by any of the above-described exemplary embodiments, but should be defined only in accordance with the claims. Furthermore, the above advantages and features are provided in described embodiments, but shall not limit the application of such issued claims to processes and structures accomplishing any or all of the above advantages.

## Claims

1. A thermoplastic polyolefin roofing or geothermal membrane (100), comprising:
a cap layer (102) made of a first thermoplastic polyolefin composition, the first thermoplastic polyolefin composition comprising thermoplastic polyolefin resins and a UV stabilizer package;
a core layer (104) made of a second thermoplastic polyolefin composition;
a scrim layer (106) disposed between the cap layer (102) and the core layer (104) ;
wherein the UV stabilizer package of the first thermoplastic polyolefin composition comprises from 0.001 weight percent to 3 weight percent ultrafine titanium dioxide having a mean particle size of 165 nanometers or less,
wherein the UV stabilizer package comprises at least one of a free radical scavenger, an antioxidant, a process stabilizer, a thermal stabilizer, and a UV absorber.

2. The thermoplastic polyolefin roofing membrane of claim 1, wherein the first thermoplastic polyolefin composition comprises rutile titanium dioxide.

3. The thermoplastic polyolefin roofing membrane of claim 2, wherein the first thermoplastic polyolefin composition comprises from 1 to 10 weight percent rutile titanium dioxide.

4. A thermoplastic polyolefin composition comprising:
a thermoplastic polyolefin resin; and
a UV stabilizer package comprising 0.001 weight percent to 3 weight percent ultrafine titanium dioxide having a mean particle size ranging from 110 to 165 nanometers,
wherein the UV stabilizer package comprises at least one of a free radical scavenger, an antioxidant, a process stabilizer, a thermal stabilizer, and a UV absorber.

5. The thermoplastic polyolefin roofing membrane of claim 3 wherein the first thermoplastic polyolefin composition further comprises from 2 to 3 weight percent rutile titanium dioxide; or
the thermoplastic polyolefin composition of claim 4 further comprising 2 to 3 weight percent rutile titanium dioxide.

6. The thermoplastic polyolefin roofing membrane of claim 1, or the thermoplastic polyolefin composition of claim 4, wherein the UV stabilizer package of the first thermoplastic polyolefin composition comprises from 0.5 weight percent to 2 weight percent of said ultrafine titanium dioxide.

7. The thermoplastic polyolefin composition of claim 6, wherein the UV stabilizer package of the first thermoplastic polyolefin composition comprises from 1.5 weight percent to 2 weight percent of said ultrafine titanium dioxide.

8. The thermoplastic polyolefin roofing membrane of claim 1, wherein the UV stabilizer package of the first thermoplastic polyolefin composition comprises ultrafine titanium dioxide having a mean particle size ranging from 110 to 165 nanometers.

9. The thermoplastic polyolefin roofing membrane of claim 8, wherein the UV stabilizer package of the first thermoplastic polyolefin composition comprises ultrafine titanium dioxide having a mean particle size ranging from 125 to 150 nanometers.

10. The thermoplastic polyolefin roofing membrane of claim 1, wherein the core layer (104) is made of a second thermoplastic polyolefin composition having a UV stabilizer package, wherein the UV stabilizer package of the first thermoplastic polyolefin composition is different from the UV stabilizer package of the second thermoplastic polyolefin composition.

11. The thermoplastic polyolefin roofing membrane of claim 1, wherein the core layer (104) is made of a second thermoplastic polyolefin composition, the first and second formulated thermoplastic polyolefin compositions comprising the same UV stabilizer package.

12. A method of manufacturing a thermoplastic polyolefin membrane (100), the method comprising:
providing a first thermoplastic polyolefin mixture comprising a thermoplastic polyolefin resin and a UV stabilizer package comprising 0.001 weight percent to 3 weight percent ultrafine titanium dioxide having a mean particle size of 165 nanometers or less; and
extruding a first thermoplastic polyolefin layer (102) from the first thermoplastic polyolefin mixture,
wherein the UV stabilizer package comprises at least one of a free radical scavenger, an antioxidant, a process stabilizer, a thermal stabilizer, and a UV absorber.

13. The method of claim 12, further comprising:
providing a second thermoplastic polyolefin mixture;
extruding a second thermoplastic polyolefin layer (104) from the second thermoplastic polyolefin mixture;
disposing a scrim layer (106) between the first and second thermoplastic polyolefin layer; laminating the first thermoplastic polyolefin layer (102), the scrim layer (106), and the second thermoplastic polyolefin layer (104) at an elevated temperature, wherein first and second thermoplastic polyolefin layers are fused through interstices of the scrim layer (106).

14. The method of claim 12, wherein the UV stabilizer package comprises from 0.5 weight percent to 2 weight percent of said ultrafine titanium dioxide, and optionally or preferably, wherein the UV stabilizer package of the first thermoplastic polyolefin composition comprises from 1.5 weight percent to 2 weight percent of said ultrafine titanium dioxide.

## Patentansprüche

1. Membran (100) aus thermoplastischem Polyolefin zum Dachdecken oder für Geothermiezwecke, umfassend:
eine Deckschicht (102), die aus einer ersten thermoplastischen Polyolefinzusammensetzung hergestellt ist, wobei die erste thermoplastische Polyolefinzusammensetzung thermoplastische Polyolefinharze und eine Gesamtheit von UV-Stabilisatoren umfasst;
eine Kernschicht (104), die aus einer zweiten thermoplastischen Polyolefinzusammensetzung besteht;
eine Schicht (106) aus grobem Textilstoff, die zwischen der Deckschicht (102) und der Kernschicht (104) angeordnet ist;
wobei die Gesamtheit von UV-Stabilisatoren der ersten thermoplastischen Polyolefinzusammensetzung 0,001 Gewichtsprozent bis 3 Gewichtsprozent an ultrafeinem Titandioxid mit einer mittleren Partikelgröße von höchstens 165 Nanometern umfasst,
wobei die Gesamtheit von UV-Stabilisatoren einen freien Radikalfänger, ein Antioxidans, einen stabilisierenden Verfahrenshilfsstoff, einen Hitzestabilisator und/oder ein UV-Absorptionsmittel umfasst.

2. Membran aus thermoplastischem Polyolefin zum Dachdecken nach Anspruch 1, wobei die erste thermoplastische Polyolefinzusammensetzung Rutil-Titandioxid umfasst.

3. Membran aus thermoplastischem Polyolefin zum Dachdecken nach Anspruch 2, wobei die erste thermoplastische Polyolefinzusammensetzung 1 bis 10 Gewichtsprozent an Rutil-Titandioxid umfasst.

4. Thermoplastische Polyolefinzusammensetzung, umfassend:
ein thermoplastisches Polyolefinharz; und
eine Gesamtheit von UV-Stabilisatoren, die 0,001 Gewichtsprozent bis 3 Gewichtsprozent an ultrafeinem Titandioxid mit einer mittleren Partikelgröße im Bereich von 110 bis 165 Nanometern umfasst,
wobei die Gesamtheit von UV-Stabilisatoren einen freien Radikalfänger, ein Antioxidans, einen stabilisierenden Verfahrenshilfsstoff, einen Hitzestabilisator und/oder ein UV-Absorptionsmittel umfasst.

5. Membran aus thermoplastischem Polyolefin zum Dachdecken nach Anspruch 3, wobei die erste thermoplastische Polyolefinzusammensetzung weiterhin 2 bis 3 Gewichtsprozent an Rutil-Titandioxid umfasst; oder
die thermoplastische Polyolefinzusammensetzung nach Anspruch 4 weiterhin 2 bis 3 Gewichtsprozent an Rutil-Titandioxid umfasst.

6. Membran aus thermoplastischem Polyolefin zum Dachdecken nach Anspruch 1, oder thermoplastische Polyolefinzusammensetzung nach Anspruch 4, wobei die Gesamtheit von UV-Stabilisatoren der ersten thermoplastischen Polyolefinzusammensetzung 0,5 Gewichtsprozent bis 2 Gewichtsprozent des ultrafeinen Titandioxids umfasst.

7. Thermoplastische Polyolefinzusammensetzung nach Anspruch 6, wobei die Gesamtheit von UV-Stabilisatoren der ersten thermoplastischen Polyolefinzusammensetzung 1,5 Gewichtsprozent bis 2 Gewichtsprozent des ultrafeinen Titandioxids umfasst.

8. Membran aus thermoplastischem Polyolefin zum Dachdecken nach Anspruch 1, wobei die Gesamtheit von UV-Stabilisatoren der ersten thermoplastischen Polyolefinzusammensetzung ultrafeines Titandioxid mit einer mittleren Partikelgröße im Bereich von 110 bis 165 Nanometern umfasst.

9. Membran aus thermoplastischem Polyolefin zum Dachdecken nach Anspruch 8, wobei die Gesamtheit von UV-Stabilisatoren der ersten thermoplastischen Polyolefinzusammensetzung ultrafeines Titandioxid mit einer mittleren Partikelgröße im Bereich von 125 bis 150 Nanometern umfasst.

10. Membran aus thermoplastischem Polyolefin zum Dachdecken nach Anspruch 1, wobei die Kernschicht (104) aus einer zweiten thermoplastischen Polyolefinzusammensetzung hergestellt ist, die eine Gesamtheit von UV-Stabilisatoren aufweist, wobei die Gesamtheit von UV-Stabilisatoren der ersten thermoplastischen Polyolefinzusammensetzung sich von der Gesamtheit von UV-Stabilisatoren der zweiten thermoplastischen Polyolefinzusammensetzung unterscheidet.

11. Membran aus thermoplastischem Polyolefin zum Dachdecken nach Anspruch 1, wobei die Kernschicht (104) aus einer zweiten thermoplastischen Polyolefinzusammensetzung hergestellt ist, wobei die erste und die zweite formulierte thermoplastische Polyolefinzusammensetzung die gleiche Gesamtheit von UV-Stabilisatoren umfassen.

12. Verfahren zur Herstellung einer Membran (100) aus thermoplastischem Polyolefin, wobei das Verfahren Folgendes umfasst:
Bereitstellen einer ersten thermoplastischen Polyolefinmischung, die ein thermoplastisches Polyolefinharz und eine Gesamtheit von UV-Stabilisatoren umfasst, welche 0,001 Gewichtsprozent bis 3 Gewichtsprozent an ultrafeinem Titandioxid mit einer mittleren Partikelgröße von höchstens 165 Nanometern umfasst; und
Extrudieren einer ersten thermoplastischen Polyolefinschicht (102) ausgehend von der ersten thermoplastischen Polyolefinmischung,
wobei die Gesamtheit von UV-Stabilisatoren einen freien Radikalfänger, ein Antioxidans, einen stabilisierenden Verfahrenshilfsstoff, einen Hitzestabilisator und/oder ein UV-Absorptionsmittel umfasst.

13. Verfahren nach Anspruch 12, wobei es weiterhin Folgendes umfasst:
Bereitstellen einer zweiten thermoplastischen Polyolefinmischung;
Extrudieren einer zweiten thermoplastischen Polyolefinschicht (104) ausgehend von der zweiten thermoplastischen Polyolefinmischung;
Anordnen einer Schicht (106) aus grobem Textilstoff zwischen der ersten und der zweiten thermoplastischen Polyolefinschicht; Laminieren der ersten thermoplastischen Polyolefinschicht (102), der Schicht (106) aus grobem Textilstoff sowie der zweiten thermoplastischen Polyolefinschicht (104) bei einer erhöhten Temperatur, wobei die erste und die zweite thermoplastische Polyolefinschicht durch Zwischenräume in der Schicht (106) aus grobem Textilstoff miteinander verschmelzen.

14. Verfahren nach Anspruch 12, wobei die Gesamtheit von UV-Stabilisatoren 0,5 Gewichtsprozent bis 2 Gewichtsprozent des ultrafeinen Titandioxids umfasst und wobei, möglicherweise oder vorzugsweise, die Gesamtheit von UV-Stabilisatoren der ersten thermoplastischen Polyolefinzusammensetzung 1,5 Gewichtsprozent bis 2 Gewichtsprozent des ultrafeinen Titandioxids umfasst.

## Revendications

1. Membrane de couverture ou membrane géothermique de polyoléfine thermoplastique (100), comprenant :
une couche de couverture (102) composée d'une première composition de polyoléfine thermoplastique, la première composition de polyoléfine thermoplastique comprenant des résines de polyoléfine thermoplastique et un assortiment de stabilisants UV ;
une couche centrale (104) composée d'une deuxième composition de polyoléfine thermoplastique ;
une couche canevas (106) disposée entre la couche de couverture (102) et la couche centrale (104) ;
l'assortiment de stabilisants UV de la première composition de polyoléfine thermoplastique comprenant de 0,001 pour cent en poids à 3 pour cent en poids de dioxyde de titane ultrafin possédant une grosseur moyenne de particule inférieure ou égale à 165 nanomètres,
l'assortiment de stabilisants UV comprenant au moins l'un parmi un piégeur de radicaux libres, un antioxydant, un stabilisant de procédé, un stabilisant thermique, et un absorbeur UV.

2. Membrane de couverture de polyoléfine thermoplastique selon la revendication 1, la première composition de polyoléfine thermoplastique comprenant du dioxyde de titane rutile.

3. Membrane de couverture de polyoléfine thermoplastique selon la revendication 2, la première composition de polyoléfine thermoplastique comprenant de 1 à 10 pour cent en poids de dioxyde de titane rutile.

4. Composition de polyoléfine thermoplastique comprenant :
une résine de polyoléfine thermoplastique ; et
un assortiment de stabilisants UV comprenant de 0,001 pour cent en poids à 3 pour cent en poids de dioxyde de titane ultrafin possédant une grosseur moyenne de particule se situant dans la plage de 110 à 165 nanomètres,
l'assortiment de stabilisants UV comprenant au moins l'un parmi un piégeur de radicaux libres, un antioxydant, un stabilisant de procédé, un stabilisant thermique, et un absorbeur UV.

5. Membrane de couverture de polyoléfine thermoplastique selon la revendication 3, la première composition de polyoléfine thermoplastique comprenant en outre de 2 à 3 pour cent en poids de dioxyde de titane rutile ; ou
la composition de polyoléfine thermoplastique selon la revendication 4 comprenant en outre 2 à 3 pour cent en poids de dioxyde de titane rutile.

6. Membrane de couverture de polyoléfine thermoplastique selon la revendication 1, ou la composition de polyoléfine thermoplastique selon la revendication 4, l'assortiment de stabilisants UV de la première composition de polyoléfine thermoplastique comprenant de 0,5 pour cent en poids à 2 pour cent en poids dudit dioxyde de titane ultrafin.

7. Composition de polyoléfine thermoplastique selon la revendication 6, l'assortiment de stabilisants UV de la première composition de polyoléfine thermoplastique comprenant de 1,5 pour cent en poids à 2 pour cent en poids dudit dioxyde de titane ultrafin.

8. Membrane de couverture de polyoléfine thermoplastique selon la revendication 1, l'assortiment de stabilisants UV de la première composition de polyoléfine thermoplastique comprenant du dioxyde de titane ultrafin possédant une grosseur moyenne de particule se situant dans la plage de 110 à 165 nanomètres.

9. Membrane de couverture de polyoléfine thermoplastique selon la revendication 8, l'assortiment de stabilisants UV de la première composition de polyoléfine thermoplastique comprenant du dioxyde de titane ultrafin possédant une grosseur moyenne de particule se situant dans la plage de 125 à 150 nanomètres.

10. Membrane de couverture de polyoléfine thermoplastique selon la revendication 1, la couche centrale (104) étant composée d'une deuxième composition de polyoléfine thermoplastique possédant un assortiment de stabilisants UV, l'assortiment de stabilisants UV de la première composition de polyoléfine thermoplastique étant différent de l'assortiment de stabilisants UV de la deuxième composition de polyoléfine thermoplastique.

11. Membrane de couverture de polyoléfine thermoplastique selon la revendication 1, la couche centrale (104) étant composée d'une deuxième composition de polyoléfine thermoplastique, les première et deuxième compositions de polyoléfine thermoplastique formulées comprenant le même assortiment de stabilisants UV.

12. Procédé de fabrication d'une membrane de polyoléfine thermoplastique (100), le procédé comprenant :
la mise à disposition d'un premier mélange de polyoléfine thermoplastique comprenant une résine de polyoléfine thermoplastique et un assortiment de stabilisants UV comprenant 0,001 pour cent en poids à 3 pour cent en poids de dioxyde de titane ultrafin possédant une grosseur moyenne de particule inférieure ou égale à 165 nanomètres ; et
l'extrusion d'une première couche de polyoléfine thermoplastique (102) à partir du premier mélange de polyoléfine thermoplastique,
l'assortiment de stabilisants UV comprenant au moins l'un parmi un piégeur de radicaux libres, un antioxydant, un stabilisant de procédé, un stabilisant thermique, et un absorbeur UV.

13. Procédé selon la revendication 12, comprenant en outre :
la mise à disposition d'un deuxième mélange de polyoléfine thermoplastique ;
l'extrusion d'une deuxième couche de polyoléfine thermoplastique (104) à partir d'un deuxième mélange de polyoléfine thermoplastique ;
la disposition d'une couche canevas (106) entre la première et la deuxième couche de polyoléfine thermoplastique ; la stratification de la première couche de polyoléfine thermoplastique (102), de la couche canevas (106), et de la deuxième couche de polyoléfine thermoplastique (104) à une température élevée, les première et deuxième couches de polyoléfine thermoplastique étant fondues à travers les interstices de la couche canevas (106).

14. Procédé selon la revendication 12, l'assortiment de stabilisants UV comprenant de 0,5 pour cent en poids à 2 pour cent en poids dudit dioxyde de titane ultrafin, et éventuellement ou préférablement, l'assortiment de stabilisants UV de la première composition de polyoléfine thermoplastique comprenant de 1,5 pour cent en poids à 2 pour cent en poids dudit dioxyde de titane ultrafin.
